# EUROPÄISCHE PATENTSCHRIFT

(11) **EP 1 990 923 B1**
(45) Veröffentlichungstag und Bekanntmachung des Hinweises auf die Patenterteilung: **23.05.2012**
(21) Anmeldenummer: 08102914.2
(22) Anmeldetag: 26.03.2008
(51) Int. Cl.: H04B 1/18, H04B 1/26

(54) **Empfangsvorrichtung**
Receiving device
Dispositif de réception

(30) Priorität: 11.05.2007 DE 102007022227
(43) Veröffentlichungstag der Anmeldung: 12.11.2008
(73) Patentinhaber: ROBERT BOSCH GMBH, 70442 Stuttgart (DE)
(72) Erfinder: Jandel, Peter, 31139, Hildesheim (DE); Passoke, Jens, 30966, Hemmingen (DE); Homann, Frank, 31139, Hildesheim (DE); Kottschlag, Gerhard, 31139, Hildesheim (DE)

(56) Entgegenhaltungen:
- EP-A1- 0 401 932
- WO-A2-03/103161
- WO-A2-2007/044652
- DE-A1- 3 226 980
- US-A- 5 784 418

## Beschreibung

### Technisches Gebiet

Die Erfindung betrifft eine Empfangsvorrichtung, insbesondere eine Empfangsvorrichtung mit zumindest zwei Antennen zum Empfang von Signalen über jeweils eine der zumindest beiden Antennen oder zum gleichzeitigen Empfang von Signalen über zumindest zwei Antennen, wobei die empfangenen Signale im gleichen Frequenzband oder sogar auf der gleichen Frequenz liegen.

### Stand der Technik

Es sind Empfangsvorrichtungen bekannt, die eine Antenne aufweisen und Signale über die Antenne empfangen und weiterverarbeiten. Solche Empfangsvorrichtungen sind beispielsweise Rundfunkempfänger. Auch sind Empfangsvorrichtungen bekannt, die zwei Antennen aufweisen und über beide Antennen Signale empfangen können. So ist durch die DE 101 15 053 A1 ein Rundfunkernpfänger bekannt geworden, welcher über zwei Antennen verfügt und bei dem die Signale der beiden Antennen auf jeweils einen Empfänger geschaltet werden.

Bei den Empfangsvorrichtungen nach dem Stand der Technik sind zwischen der Antenne und dem Empfänger jeweils pro Antenne eine elektrische Kabelverbindung notwendig, so dass dies eine Fehlerquelle birgt und Kosten verursacht. Weiterhin wird dadurch das Gewicht der Vorrichtung erhöht. Bei einer Anwendung im Fahrzeugbereich bedeutet somit die Verwendung von einem Kabel pro Antenne eine aufwändige Verkabelung, die auch Bauraum beansprucht, der in einem Fahrzeug stets knapp ist. Darüber hinaus bedeutet die Verwendung von einem Kabel pro Antenne eine grundsätzliche Fehlerquelle, da die Kabel typischer Weise mittels Steckverbindungen an den Schnittstellen verbunden werden müssen und solche Steckverbindungen eine generelle Fehlerquelle darstellen.

Aus der Druckschrift US 5,784,418 A ist eine Empfangsschaltung mit zwei Antennen bekannt. Die erste Antenne ist mit einer ersten Untervorrichtung verbunden, wobei eine zweite Antenne mit einer zweiten Untervorrichtung verbunden ist. Dieser Empfänger ist für unterschiedliche Frequenzbänder vorgesehen.

Das Dokument DE 32 26 980 A1 beschreibt eine Schaltung für den Empfang von verschiedenen Frequenzbänder, und zwar VHF/UHF-Fernsehbänder mit terrestrischer Antenne und dem SHF-Bereich mit Satellitenantenne. Zwischen zwei Schaltungsteilen ist ein einziges Koaxialkabel vorhanden.

Die WO 03/103161 A2 offenbart eine Anordnung mit mehreren Antennen, die durch Busschnittstellen mit einem Bus verbunden sind.

### Darstellung der Erfindung, Aufgabe, Lösung, Vorteile

Es ist die Aufgabe der vorliegenden Erfindung, eine Empfangsvorrichtung zu schaffen, welche ein geringeres Potenzial für Fehler darstellt und geringere Kosten verursacht und gleichzeitig ein geringeres Gewicht aufweist.

Erfindungsgemäß wird die Aufgabe bezüglich der Vorrichtung gelöst mit den Merkmalen von Anspruch 1.

Die erfindungsgemäße Empfangsvorrichtung ist dabei derart ausgebildet, dass sie zum Empfangen und Auswerten von Signalen mit zumindest zwei Antennen versehen ist, wobei die Empfangsvorrichtung zwei Untervorrichtungen aufweist, die mittels elektrischer Verbindung miteinander verbunden sind, wobei ein Signal der ersten Antenne ohne Frequenzumsetzung von der ersten Untervorrichtung zu der zweiten Untervorrichtung übertragen wird und ein Signal der zweiten Antenne nach einer Frequenzumsetzung durch einen Frequenzmischer von der ersten Untervorrichtung zu der zweiten Untervorrichtung übertragen wird.Dabei ist es besonders vorteilhaft, dass die Frequenzumsetzung des zweiten Signals durch einen ersten Frequenzmischer mit einer ersten Zwischenfrequenz erfolgt.

Erfindungsgemäß erfolgt die elektrische Verbindung zur Übertragung von Signalen von der ersten Untervorrichtung zur zweiten Untervorrichtung durch ein einziges Kabel, das als zweipoliges Kabel und besonders vorteilhaft als Koaxialkabel ausgeführt ist.

Dabei ist es besonders zweckmäßig, wenn eine Frequenzumsetzung des ersten Signals in der zweiten Untervorrichtung erfolgt, wobei die Frequenzumsetzung durch einen zweiten Frequenzmischer erfolgt, dessen zweite Zwischenfrequenz vorteilhaft mit der ersten Zwischenfrequenz des ersten Frequenzmischers zumindest vergleichbar ist oder gleich ist. Vergleichbar bedeutet dabei, dass die eine Zwischenfrequenz nicht um mehr als zehnfache Filterbandbreite von der anderen Zwischenfrequenz abweicht.

Besonders zweckmäßig, ist es, wenn das erste und/oder das zweite Signal in der ersten Untervorrichtung vor der Übertragung zur zweiten Untervorrichtung mittels eines Filters gefiltert und/oder mittels eines Verstärkers verstärkt wird.

Auch ist es bei einem weiteren Ausführungsbeispiel zweckmäßig, wenn zur elektrischen Spannungsversorgung zumindest einer der Untervorrichtungen eine Gleichspannung verwendet wird, wobei die Gleichspannung vorzugsweise über die elektrische Verbindung zwischen den beiden Untervorrichtungen führbar ist. Weiterhin ist es zweckmäßig, wenn Steuersignale über die elektrische Verbindung zwischen den beiden Untervorrichtungen führbar sind.

Auch ist es zweckmäßig, wenn die zumindest zwei Antennen eine gemeinsame Antennenstruktur bilden. Dabei ist eine Antennenstruktur eine Baueinheit von zumindest zwei Antennen.

Dabei ist es vorteilhaft, wenn das Signal der ersten Antenne und das Signal der zweiten Antenne der Antennenstruktur entnommen werden. Dabei kann es vorteilhaft sein, wenn ein Signalpfad des ersten und/oder des zweiten Signals mit einer selektiven Impedanzanpassung ausgeführt ist, wobei die selektive Impedanzanpassung eines Signalpfads vorzugsweise derart ausgeführt ist, dass er dem anderen Signalpfad in weiten Bereichen des Empfangsbandes keine Energie entzieht. Dies verbessert die Empfangsleistung des Empfangssystems immer dann, wenn die zwei Empfangsfrequenzen hinreichend weit voneinander entfernt sind.

Vorteilhafte Weiterbildungen sind in den Unteransprüchen beschrieben.

### Kurze Beschreibung der Zeichnungen

Nachstehend wird die Erfindung auf der Grundlage eines Ausführungsbeispiels anhand der Zeichnungen näher erläutert. Es zeigt:

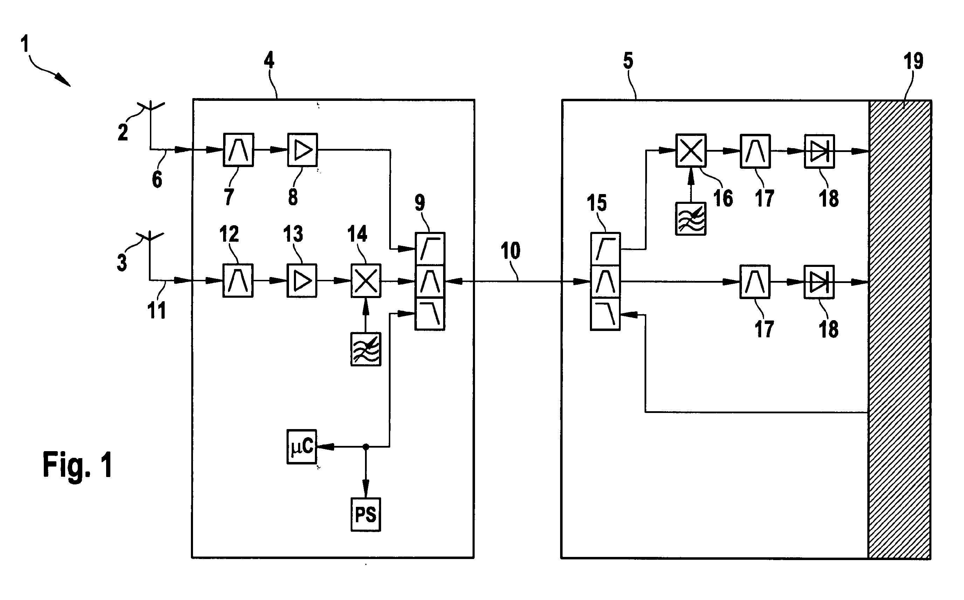

- Fig. 1: ein Bockschaltbild zur Erläuterung der erfindungsgemäßen Vorrichtung

### Bevorzugte Ausführung der Erfindung

Die Figur 1 zeigt ein Blockschaltbild einer erfindungsgemäßen Empfangsvorrichtung 1 mit einer ersten Antenne 2 und einer zweiten Antenne 3. Die erfindungsgemäße Empfangsvorrichtung wird gemäß Figur 1 als Doppelempfangsvorrichtung erläutert, wobei auch eine über zwei hinausgehende Anzahl von Antennen vorgesehen sein kann. Die Erfindung bezieht sich somit nicht lediglich auf eine Empfangsvorrichtung mit zwei Antennen. Das Ausführungsbeispiel ist somit nicht beschränkend für den Schutzumfang. Statt der zwei Antennen können auch drei, vier oder mehr Antennen vorgesehen sein.

Die erfindungsgemäße Empfangsvorrichtung besteht im Wesentlichen aus zwei Untervorrichtungen 4,5, wobei die Untervorrichtung 4 dazu dient, die Antennensignale zu konditionieren und das Untersystem 5 dient als Empfangsteil der Vorrichtung, dem die Antennensignale zugeführt werden.

Das von der Antenne 2 empfangene und weiterzuleitende Signal 6 wird ohne Frequenzumsetzung von der ersten Untervorrichtung 4 zur zweiten Untervorrichtung 5 geleitet. Allerdings kann das Signal 6 in der ersten Untervorrichtung mittels eines Filters 7 und/oder eines Verstärkers 8 gefiltert und/oder verstärkt werden. Das so gegebenenfalls gefilterte und/oder verstärkte Signal 6 wird über einen in diesem Beispiel frequenzselektiven Combiner 9 in die Verbindung 10 zwischen der ersten Untervorrichtung und der zweiten Unterverbindung eingespeist. Das zweite Antennensignal 11 der zweiten Antenne 3 kann mittels eines Filters 12 und/oder Verstärkers 13 gefiltert und verstärkt werden, bevor es mittels eines Mischers 14 auf eine Zwischenfrequenz gemischt wird. Das so gemischte Zwischenfrequenz-Signal (ZF-Signal) wird neben dem nicht gemischten Signal der ersten Antenne in die Verbindung 10 eingespeist. Die Verbindung 10 kann vorzugsweise ein Kabel oder eine anderweitige elektrische Verbindung sein.

Die Mischung auf die Zwischenfrequenz des zweiten Signals 11 der zweiten Antenne 3 erfolgt vorzugsweise am Fußpunkt der zweiten Antenne oder in der Nähe einer der Empfangsantennen 2,3 in der ersten Untervorrichtung 4. Dabei wird das Signal auf eine Zwischenfrequenz gemischt, die nicht im Empfangsspektrum liegt.

Dadurch können die beiden Signale auf die Verbindung zwischen der ersten Untervorrichtung und der zweiten Untervorrichtung geleitet werden.

Nach Durchlaufen des in diesem Beispiel frequenzselektiven Splitters 15 wird das bisher noch nicht gemischte Signal der ersten Antenne im Mischer 16 gemischt. Anschließend werden die Signale mittels der Verarbeitungsstufen ZF-Filter 17, Verstärker/Demodulator 18 und/oder anderen nachfolgenden Stufen 19 weiter verarbeitet.

Alternativ kann zu dem oben beschriebenen auch eine Weiterleitung des Antennensignals der ersten Antenne zum Fußpunkt der zweiten Antenne oder eine Weiterleitung des Antennensignals der zweiten Antenne zum Fußpunkt der ersten Antenne und in beiden Fällen dann die entsprechende oben beschriebene Weiterverarbeitung erfolgen.

Die oben beschriebene Vorrichtung weist zwischen den beiden Untervorrichtungen 4,5 als Untereinheiten lediglich eine elektrische Verbindung 10, wie ein Kabel o.ä. auf, mittels welchem beide Antennensignale übertragen werden. Durch die Verwendung nur eines Kabels kann die Teilevielfalt reduziert werden und gleichzeitig kann die Störanfälligkeit durch die Reduzierung benötigter Schnittstellen und durch die Reduzierung der Anzahl verwendeter Teile vermindert werden. Auch erbringt dies eine Gewichtsminderung, die insbesondere im Fahrzeugbereich vorteilhaft ist.

Die beiden Mischer 14,16 können so ausgestaltet sein, dass sie unterschiedliche Zwischenfrequenzen aufweisen oder auch gleiche Zwischenfrequenzen aufweisen. So können beide Zwischenfrequenzen beispielsweise 10,7 MHz sein. In diesem Falle würde sich ein Kostenvorteil ergeben, da in diesem Frequenzbereich viele Standardbauteile angeboten werden, die verwendet werden könnten.

Auch können beide Antenneneinheiten die gleichen Frequenzen empfangen und dennoch stehen der weiteren Signalverarbeitung zwei unkorrelierte Signale zur Verfügung, die über nur eine Antennenleitung 10 geführt werden.

## Patentansprüche

1. Empfangsvorrichtung (1) zum Empfangen und Auswerten von Signalen mit zumindest zwei Antennen (2,3), wobei die Vorrichtung (1) zwei Untervorrichtungen (4,5) aufweist, die mittels elektrischer Verbindung (10) miteinander verbunden sind, **dadurch gekennzeichnet, dass** beide Antennen (2, 3) elektrisch nur mit der ersten Untervorrichtung (4) verbunden sind, dass ein Signal (6) der ersten Antenne (2) ohne Frequenzumsetzung von der ersten Untervorrichtung (4) zu der zweiten Untervorrichtung (5) durch die elektrische Verbindung (10) übertragen wird und ein Signal (11) der zweiten Antenne (3) mit einer Frequenzumsetzung durch einen Frequenzmischer (14) von der ersten Untervorrichtung (4) zu der zweiten Untervorrichtung (5) ebenfalls durch die elektrische Verbindung (10) übertragen wird, dass durch einen zweiten Frequenzmischer (16) in der zweiten Untervorrichtung (5) eine Frequenzumsetzung nur des ersten Signals (6) erfolgt, dass die elektrische Verbindung (10) zur Übertragung von Signalen von der ersten Untervorrichtung (4) zur zweiten Untervorrichtung (5) durch ein einziges Kabel, und zwar durch ein zweipoliges Kabel oder Koaxialkabel erfolgt, und dass die empfangenen Signale (6, 11) im gleichen Rundfunk-Frequenzband oder sogar auf der gleichen Frequenz liegen.

2. Empfangsvorrichtung nach Anspruch 1 oder 2, **dadurch gekennzeichnet, dass** die empfangenen Signale nach der Verarbeitung in der zweiten Untervorrichtung (5) zu einem Signal zusammengeführt werden.

3. Empfangsvorrichtung nach einem der vorhergehenden Ansprüche, **dadurch gekennzeichnet, , dass** eine zweite Zwischenfrequenz des zweiten Frequenzmischers (16) mit einer ersten Zwischenfrequenz des ersten Frequenzmischers (14) zumindest vergleichbar oder gleich ist.

4. Empfangsvorrichtung nach einem der Ansprüche 1 oder 2, **dadurch gekennzeichnet, dass** eine zweite Zwischenfrequenz des zweiten Frequenzmischers (16) und eine erste Zwischenfrequenz des ersten Frequenzmischers (14) vorhanden sind, wobei eine der gewählten Zwischenfrequenzen das Basisband ist.

5. Empfangsvorrichtung nach einem der vorhergehenden Ansprüche, **dadurch gekennzeichnet, dass** das erste und/oder das zweite Signal (6,11) in der ersten Untervorrichtung (4) vor der Übertragung zur zweiten Untervorrichtung (5) gefiltert und/oder verstärkt wird.

6. Empfangsvorrichtung nach einem der vorhergehenden Ansprüche, **dadurch gekennzeichnet, dass** ein Filtermittel (7, 12) am Eingang der ersten Untervorrichtung (4) als Bandfilter ausgeführt ist und / oder eine Mischstufe des ersten Frequenzmischers (14) als festfrequenzmischende Stufe ausgebildet ist, die das gesamte oder einen Teil des Bandes in eine andere Frequenzlage umsetzt.

7. Empfangsvorrichtung nach einem der vorhergehenden Ansprüche, **dadurch gekennzeichnet, dass** die in der ersten Untervorrichtung realisierte Verstärkung in Abhängigkeit des empfangenen Signalpegels geregelt werden kann.

8. Empfangsvorrichtung nach einem der vorhergehenden Ansprüche, **dadurch gekennzeichnet, dass** zur elektrischen Spannungsversorgung zumindest einer der Untervorrichtungen (4,5) eine Gleichspannung verwendet wird, wobei die Gleichspannung vorzugsweise über die elektrische Verbindung (10) zwischen den beiden Untervorrichtungen führbar ist.

9. Empfangsvorrichtung nach einem der vorhergehenden Ansprüche, **dadurch gekennzeichnet, dass** Steuersignale über die elektrische Verbindung (10) zwischen den beiden Untervorrichtungen (4,5) führbar sind.

10. Empfangsvorrichtung nach einem der vorhergehenden Ansprüche, **dadurch gekennzeichnet, dass** die zumindest zwei Antennen (2,3) eine gemeinsame Antennenstruktur bilden.

11. Empfangsvorrichtung nach Anspruch 10, **dadurch gekennzeichnet, dass** das Signal der ersten Antenne (6) und das Signal der zweiten Antenne (11) der Antennenstruktur entnommen werden.

12. Empfangsvorrichtung nach Anspruch 11, **dadurch gekennzeichnet, dass** ein Signalpfad des ersten oder des zweiten Signals (6,11) mit einer selektiven Impedanzanpassung ausgeführt ist.

13. Empfangsvorrichtung nach Anspruch 12, **dadurch gekennzeichnet, dass** die selektive Impedanzanpassung eines Signalpfads derart ausgeführt ist, dass er dem anderen Signalpfad keine Energie entzieht.

## Claims

1. Reception apparatus (1) for receiving and evaluating signals having at least two antennas (2, 3), wherein the apparatus (1) has two subapparatuses (4, 5) which are connected to one another by means of electrical connection (10), **characterized in that** both antennas (2, 3) are electrically connected only to the first subapparatus (4), **in that** a signal (6) from the first antenna (2) is transmitted without frequency conversion from the first subapparatus (4) to the second subapparatus (5) by the electrical connection (10) and a signal (11) from the second antenna (3) is transmitted with a frequency conversion by a frequency mixer (14) from the first subapparatus (4) to the second subapparatus (5) likewise by the electrical connection (10), **in that** a second frequency mixer (16) in the second subapparatus (5) performs frequency conversion only on the first signal (6), **in that** the electrical connection (10) for transmitting signals from the first subapparatus (4) to the second subapparatus (5) is made by a single cable, specifically by a two-pole cable or coaxial cable, and **in that** the received signals (6, 11) are in the same broadcast radio frequency band or even on the same frequency.

2. Reception apparatus according to Claim 1, **characterized in that** the received signals are combined to form one signal after the processing in the second subapparatus (5).

3. Reception apparatus according to one of the preceding claims, **characterized in that** a second intermediate frequency of the second frequency mixer (16) is at least comparable with or the same as a first intermediate frequency of the first frequency mixer (14).

4. Reception apparatus according to one of Claims 1 and 2, **characterized in that** a second intermediate frequency of the second frequency mixer (16) and a first intermediate frequency of the first frequency mixer (14) are available, wherein one of the chosen intermediate frequencies is the baseband.

5. Reception apparatus according to one of the preceding claims, **characterized in that** the first and/or the second signal (6, 11) is filtered and/or amplified in the first subapparatus (4) prior to transmission to the second subapparatus (5).

6. Reception apparatus according to one of the preceding claims, **characterized in that** a filter means (7, 12) at the input of the first subapparatus (4) is designed as a bandpass filter and/or a mixing stage of the first frequency mixer (14) is in the form of a stage which mixes a fixed frequency and which converts all or some of the band to another frequency.

7. Reception apparatus according to one of the preceding claims, **characterized in that** the gain implemented in the first subapparatus can be regulated on the basis of the received signal level.

8. Reception apparatus according to one of the preceding claims, **characterized in that** a DC voltage is used for supplying electrical power to at least one of the subapparatuses (4, 5), wherein the DC voltage can preferably be routed via the electrical connection (10) between the two subapparatuses.

9. Reception apparatus according to one of the preceding claims, **characterized in that** control signals can be routed via the electrical connection (10) between the two subapparatuses (4, 5).

10. Reception apparatus according to one of the preceding claims, **characterized in that** the at least two antennas (2, 3) form a joint antenna structure.

11. Reception apparatus according to Claim 10, **characterized in that** the signal from the first antenna (6) and the signal from the second antenna (11) are taken from the antenna structure.

12. Reception apparatus according to Claim 11, **characterized in that** a signal path for the first or the second signal (6, 11) is designed to have selective impedance matching.

13. Reception apparatus according to Claim 12, **characterized in that** the selective impedance matching of a signal path is designed such that it draws no power from the other signal path.

## Revendications

1. Dispositif de réception (1) pour recevoir et interpréter des signaux avec au moins deux antennes (2, 3), le dispositif (1) présentant deux sous-dispositifs (4, 5) qui sont reliés ensemble au moyen d'une liaison électrique (10), **caractérisé en ce que** les deux antennes (2, 3) ne sont reliées électriquement qu'avec le premier sous-dispositif (4), **en ce qu'**un signal (6) de la première antenne (2) est transmis sans conversion de fréquence du premier sous-dispositif (4) au deuxième sous-dispositif (5) par le biais de la liaison électrique (10) et un signal (11) de la deuxième antenne (3) est également transmis par le biais de la liaison électrique (10) du premier sous-dispositif (4) au deuxième sous-dispositif (5), avec une conversion de fréquence par un mélangeur de fréquences (14), **en ce qu'**une conversion de fréquence du premier signal (6) seulement est effectuée par un deuxième mélangeur de fréquences (16) dans le deuxième sous-dispositif (5), **en ce que** la liaison électrique (10) destinée à la transmission de signaux du premier sous-dispositif (4) vers le deuxième sous-dispositif (5) s'effectue par un seul câble, à savoir par un câble bipolaire ou un câble coaxial, et **en ce que** les signaux reçus (6, 11) se trouvent dans la même bande de fréquences de radiodiffusion ou même à la même fréquence.

2. Dispositif de réception selon la revendication 1, **caractérisé en ce que** les signaux reçus sont rassemblés en un seul signal après le traitement dans le deuxième sous-dispositif (5).

3. Dispositif de réception selon l'une des revendications précédentes, **caractérisé en ce qu'**une deuxième fréquence intermédiaire du deuxième mélangeur de fréquences (16) est au moins comparable ou égale à une première fréquence intermédiaire du premier mélangeur de fréquences (14).

4. Dispositif de réception selon l'une des revendications 1 ou 2, **caractérisé en ce qu'**il existe une deuxième fréquence intermédiaire du deuxième mélangeur de fréquences (16) et une première fréquence intermédiaire du premier mélangeur de fréquences (14), l'une des fréquences intermédiaires choisies étant la bande de base.

5. Dispositif de réception selon l'une des revendications précédentes, **caractérisé en ce que** le premier et/ou le deuxième signal (6, 11) est filtré et/ou amplifié dans le premier sous-dispositif (4) avant la transmission au deuxième sous-dispositif (5).

6. Dispositif de réception selon l'une des revendications précédentes, **caractérisé en ce qu'**un moyen de filtrage (7, 12) à l'entrée du premier sous-dispositif (4) est réalisé sous la forme d'un filtre passe-bande et/ou un étage mélangeur du premier mélangeur de fréquences (14) est réalisé sous la forme d'un étage mélangeur de fréquence fixe qui convertit la totalité ou une partie de la bande dans une autre position de fréquence.

7. Dispositif de réception selon l'une des revendications précédentes, **caractérisé en ce que** l'amplification réalisée dans le premier sous-dispositif peut être régulée en fonction du niveau du signal reçu.

8. Dispositif de réception selon l'une des revendications précédentes, **caractérisé en ce qu'**une tension continue est utilisée pour l'alimentation électrique d'au moins l'un des sous-dispositifs (4, 5), la tension continue pouvant être acheminée de préférence par le biais de la liaison électrique (10) entre les deux sous-dispositifs.

9. Dispositif de réception selon l'une des revendications précédentes, **caractérisé en ce que** des signaux de commande peuvent être acheminés par le biais de la liaison électrique (10) entre les deux sous-dispositifs (4, 5).

10. Dispositif de réception selon l'une des revendications précédentes, **caractérisé en ce que** les au moins deux antennes (2, 3) forment une structure d'antenne commune.

11. Dispositif de réception selon la revendication 10, **caractérisé en ce que** le signal de la première antenne (6) et le signal de la deuxième antenne (11) sont prélevés de la structure d'antenne.

12. Dispositif de réception selon la revendication 11, **caractérisé en ce qu'**un trajet de signal du premier ou du deuxième signal (6, 11) est réalisé avec une adaptation d'impédance sélective.

13. Dispositif de réception selon la revendication 12, **caractérisé en ce que** l'adaptation d'impédance sélective d'un trajet de signal est réalisée de telle sorte qu'il ne soutire pas d'énergie de l'autre trajet de signal.
